(19) Europäisches Patentamt / European Patent Office / Office européen des brevets

(11) **EP 3 337 115 B1**

(12) **EUROPEAN PATENT SPECIFICATION**

(45) Date of publication and mention
of the grant of the patent:
**30.03.2022 Bulletin 2022/13**

(51) International Patent Classification (IPC):
**H04L 27/26** (2006.01)

(52) Cooperative Patent Classification (CPC):
**H04L 27/2666**

(21) Application number: **16306692.1**

(22) Date of filing: **15.12.2016**

(54) **COMBINING DIFFERENT OFDM NUMEROLOGIES IN ONE BAND**

KOMBINIEREN UNTERSCHIEDLICHER NUMEROLOGIEN IN EINEM FREQUENZBAND

COMBINAISON DE NUMÉROLOGIES DIFFÉRENTES DANS UNE BANDE DE FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.06.2018 Bulletin 2018/25**

(73) Proprietor: **Alcatel Lucent
91620 Nozay (FR)**

(72) Inventors:
• **Rheinschmitt, Rupert
70435 Stuttgart (DE)**
• **Fuchs, Rolf
70435 Stuttgart (DE)**

(74) Representative: **DREISS Patentanwälte PartG
mbB
Friedrichstraße 6
70174 Stuttgart (DE)**

(56) References cited:
• Erik Dahlman ET AL: "New 5G Radio-Access Technology" In: "4g, LTE Evolution and the Road to 5G", 1 January 2016 (2016-01-01), Elsevier, XP55380548, ISBN: 978-0-12-804575-6 pages 547-573, DOI: 10.1016/B978-0-12-804575-6.00024-8, * paragraph [24.2.1] *

• "3GPP TR 25.814 V1.2.0; 3rd Generation Partnership Project; Technical Specification Group Radio Access Network; Physical Layer Aspects for Evolved UTRA (Release 7)", INTERNET CITATION, February 2006 (2006-02), XP002400401, Retrieved from the Internet: URL:http://www.3gpp.org/ftp/Specs/html-inf o/25814.htm [retrieved on 2006-09-26]

• NOKIA ET AL: "On the URLLC transmission formats for NR TDD", 3GPP DRAFT; R1-167269, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 12 August 2016 (2016-08-12), XP051142024, Retrieved from the Internet: URL:http://www.3gpp.org/ftp/tsg_ran/WG1_RL 1/TSGR1_86/Docs/ [retrieved on 2016-08-12]

• INTEL CORPORATION: "Multiplexing of different numerologies for forward compatibility", 3GPP DRAFT; R1-167124 NR NUMEROLOGY MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 13 August 2016 (2016-08-13), XP051133001, Retrieved from the Internet: URL:http://www.3gpp.org/ftp/tsg_ran/WG1_RL 1/TSGR1_86/Docs/ [retrieved on 2016-08-13]

**Description**

**Field of the invention**

The present disclosure is directed to an OFDM-modulator, an OFDM-demodulator, a method to operate an OFDM-modulator, and a method to operate an OFDM-demodulator.

**Background**

Evolving radio communications standards like 5G permit an efficient multi-cell / multi-TP (transmission point) support of mixed numerologies, namely mixed carrier configurations. 5G in general and specifically 3GPP New Radio targets multi-service support within one carrier. As the different service use cases are very different from each other, they motivate different multi-carrier waveform parameters each. The textbook "4G, LTE Evolution and the Road to 5G" by Erik Dahlman et al,the document "On the URLLC transmission formats for NR TDD", 3GPP, R1-167269 by Nokia  et al and "Multiplexing of different numerologies for forward compatibility", 3GPP, R1-167124 by Intel all disclose different numerologies in parallel sub-bands.

**Summary**

The invention is as defined in the independent claims.

Due to different frequency offsets an increase in transport capacity can be achieved by using the same block lengths but different frequency offsets. Moreover, the coexistence of different numerologies in the sense of different block lengths is still possible.

According to an advantageous embodiment the same block length of the first and second inverse Fast Fourier Transform multiplied with an integer factor greater than one equals a main block length. This allows combining the plurality of modulation/demodulation systems with different block lengths on a fixed subcarrier grid. Moreover, it is provided that the different symbol streams (of different numerology) do not interfere as orthogonality of subcarriers is maintained.

According to an advantageous embodiment the main block length equals 2048. This scheme therefore supports a migration from 4G/LTE to 5G.

A plurality of inverse Fast Fourier Transforms can occupy the same frequency range by interleaving of the respective frequency portions/subcarriers.

**Brief description of the figures**

Figure 1a, 1b, 3, 4 and 5 show a schematic block diagram of an ODFM-modulator or an OFDM-demodulator, respectively;

Figures 1c, 1d show a schematic sequence diagram, respectively;

Figure 2 shows a schematic cellular radio communications network; and

Figure 6 illustrates schematically a frequency offset scheme.

**Description of the embodiments**

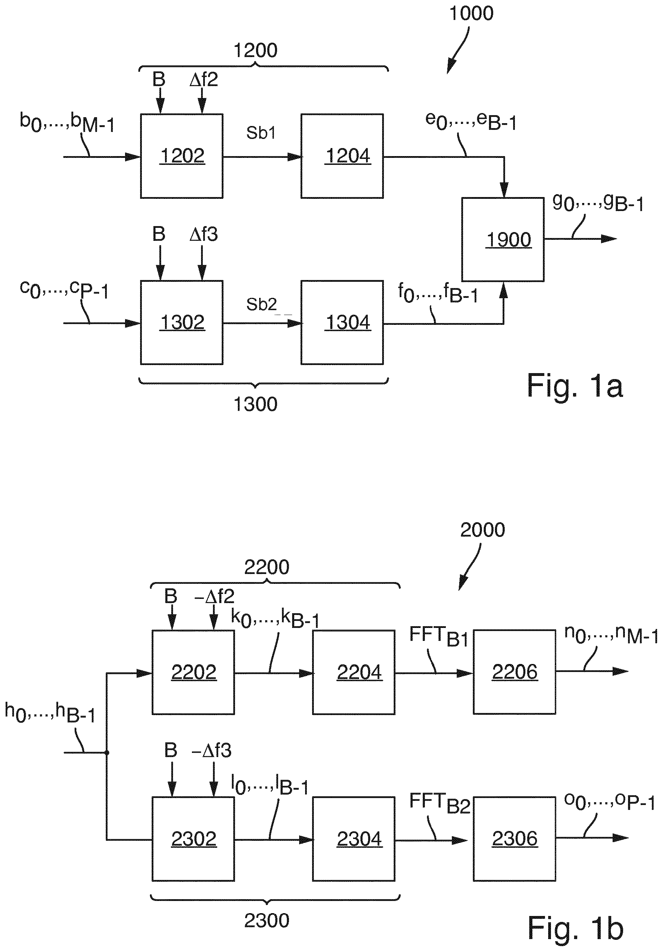

Figure 1a shows a schematic block diagram of an OFDM-modulator 1000 with a first processing chain 1200 and a second processing chain 1300. A first block 1202 of the first processing chain 1200 receives a first ingress modulation-symbol stream $b_0,...,b_{M-1}$ and determines a first inverse Fast Fourier Transform of a first block length B. The first inverse Fast Fourier Transform is frequency-shifted by the first frequency offset $\Delta f2$ resulting in first frequency-shifted samples Sb1

. A second block 1204 of the first processing chain 1200 receives the first frequency-shifted samples Sb1 and determines a first egress sample stream $e_0,...,e_{B-1}$.

A first block 1302 of the second processing chain 1300 receives a second ingress modulation-symbol stream $c_0,...,c_{P-1}$ and determines a second inverse Fast Fourier Transform of the first block length B. The second inverse Fast Fourier Transform is frequency-shifted by the second frequency offset $\Delta f3$ resulting in second frequency-shifted samples Sb2.

A second block 1304 of the second processing chain 1300 receives the second frequency-shifted samples Sb2 and determines a second egress sample stream $f_0,...,f_{B-1}$. A block 1900 determines a joined sample stream $g_0,...,g_{B-1}$ in dependence on the first and second egress sample streams $e_0...e_{3-1}$ , $f_0,...,f_{B-1}$ for up-converting the joined sample stream $g_0,..., g_{B-1}$ to a carrier frequency higher than respective subcarrier frequencies.

Figure 1b shows schematic block diagram of an OFDM-demodulator 2000. A down-converted sample stream $h_0,...h_{B-1}$ is received from an A/D-converter of the respective radio module R1, R2. A block 2202 of a first processing chain 2200 determines a first ingress sample stream $k_0,...,k_{B-1}$ of the first block length B in dependence on the down-converted sample stream $h_0,...,h_{B-1},...$ and in dependence on the first frequency offset Δf2 to the subcarrier frequency, wherein the first ingress sample stream $k_0,...,k_{B-1}$ is back-shifted in frequency by the first frequency offset Δf2. A block 2204 determines a first forward Fast Fourier Transform $FFT_{B1}$ of the first block length B in dependence on the first ingress sample stream $k_0,...,k_{B-1}$. A block 2206 determines a first egress demodulation-symbol stream $n_0,...,n_{M-1}$ in dependence on the first forward Fast Fourier Transform $FFT_{B1}$.

A block 2302 of a second processing chain 2300 determines a second ingress sample stream $l_0,...,l_{B-1}$ in dependence on the down-converted sample stream $h_0,...,h_{B-1},...$ of the first block length B and in dependence on the second frequency offset Δf3 to the subcarrier frequency, wherein the second ingress sample stream $l_0,...,l_{B-1}$ is back-shifted in frequency by the second frequency offset Δf3. A block 2304 determines a second forward Fast Fourier Transform $FFT_{B2}$ of the first block length B in dependence on the second ingress sample stream $l_0,...,l_{B-1}$. A block 2306 determines a second egress demodulation-symbol stream $o_0,...,o_{P-1}$ in dependence on the second forward Fast Fourier Transform $FFT_{B2}$.

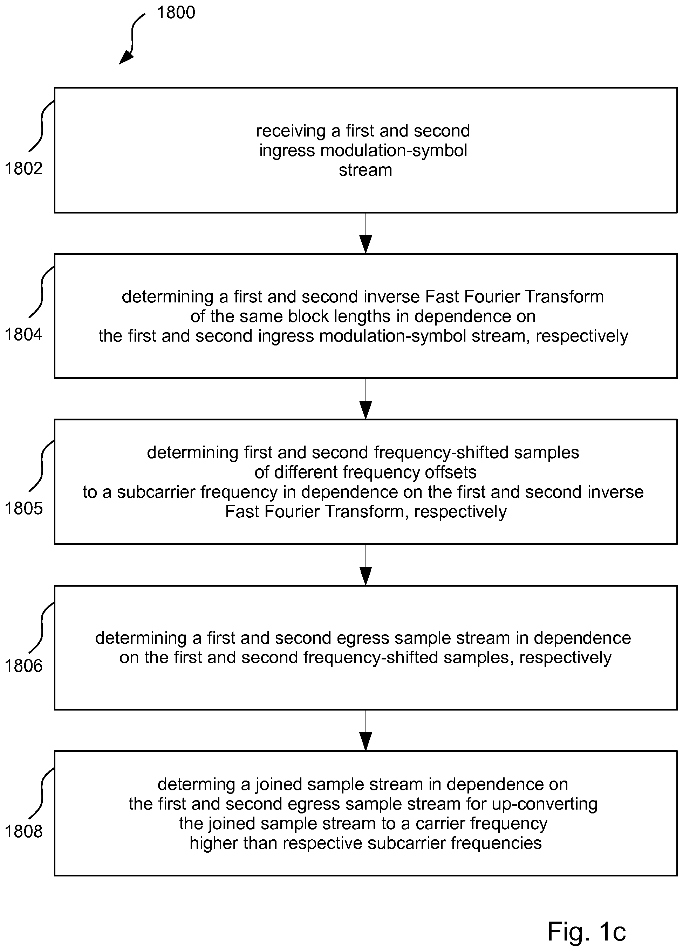

Figure 1c shows a schematic sequence diagram 1800 to operate the ODFM-modulator 1000 comprising steps 1802, 1804, 1805, 1806 and 1808.

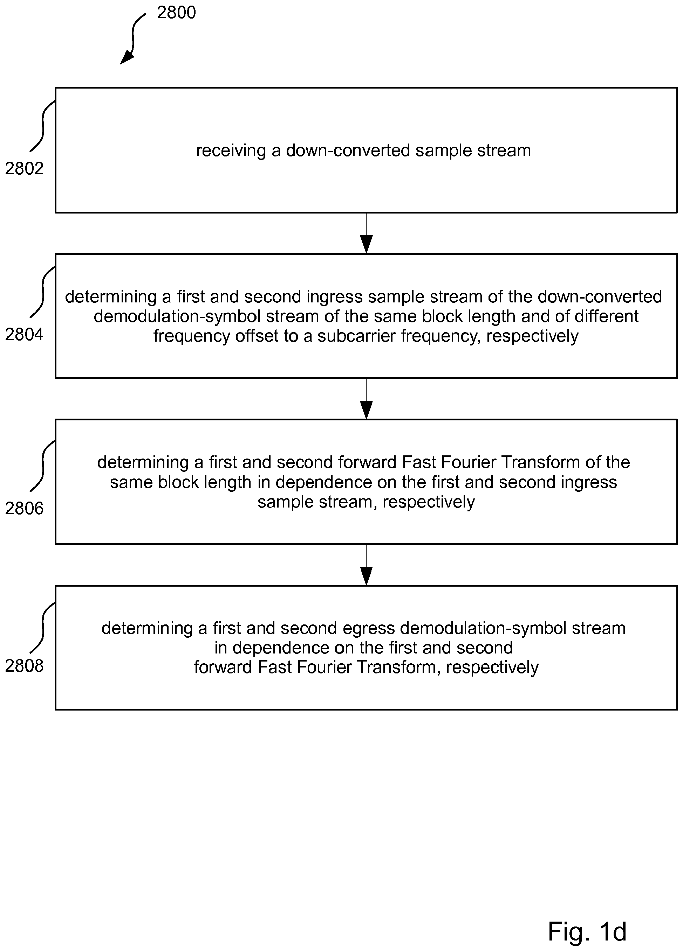

Figure 1d shows a schematic sequence diagram 2800 to operate an OFDM-demodulator 2000 comprising steps 2802, 2804, 2806 and 2808.

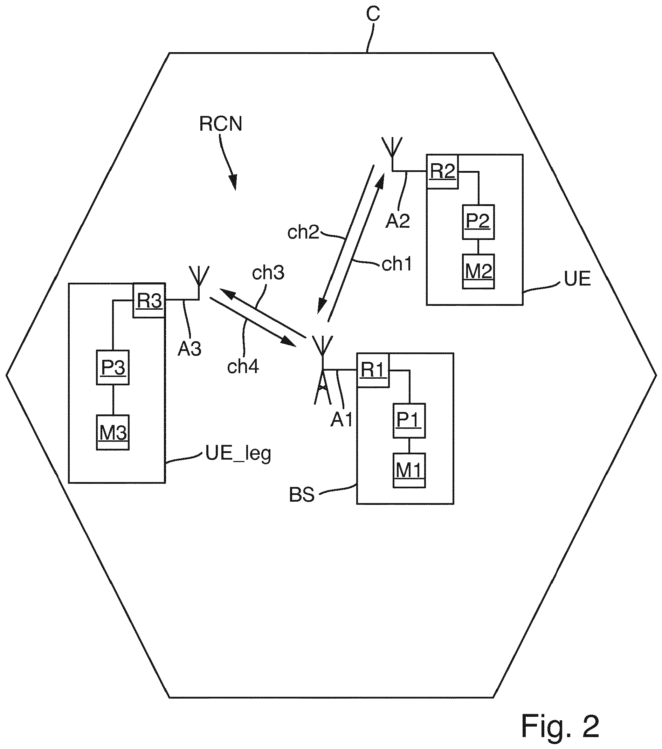

Figure 2 shows a schematic cellular radio communications network RCN. The cellular radio communications network RCN is a cellular network, wherein the first radio device BS establishes a radio cell C. The first radio device BS is a base station, a LTE eNodeB, a 5G transmission point, a WiFi access point, a remote radio head, RRH, or else. The first radio device BS is in particular suitable to serve the radio cell C and to connect user equipment in the sense of radio devices UE, UE_leg inside the radio cell C to the cellular radio communications network RCN. The first radio device BS is e.g. implemented as a stand-alone equipment.

The second and third radio devices UE, UE_leg reside in the radio cell C and may be referred to as user equipment or machine equipment.

The third radio device UE_leg is a LTE legacy device and fulfils 3GPP TS36.211 V14.00 Sep. 2016 The first and second radio devices BS and UE comprise an OFDM-modulator 1000 and/or an OFDM-demodulator 2000, respectively. Many of the embodiments of this description allow operating the third radio device UE_leg in the cell C together with the first and second radio devices BS and UE.

The first radio device BS comprises a memory M1, a processor P1, a radio module R1, and an antenna A1. The second radio device UE comprises a memory M2, the processor P2, a radio module R2, and an antenna A2. The third radio device UE_leg comprises a memory and 3, processor P3, a radio module are 3 and an antenna A1. The processors P1, P2, P3 are implemented using e.g. a DSP, FPGA, or the like or a combination thereof. The memory M1, M2, M3 is implemented using e.g. a RAM, ROM, DDR, Flash memory, or the like, or a combination thereof. The memory M1, M2, M3 stores e.g. computer readable instructions, thus instructions executable by the processor P1, P2, P3. The processor P1 processes data to be transmitted to the first and second radio device UE, UE_leg. The processing includes the steps necessary to fulfil the requirements set by the radio communications network RCN.

At least parts of the above described cellular radio communications network RCN including sender and/or receiver of the first radio device BS could be implemented using network functions virtualization (NFV). NFV is a network architecture that makes use of technologies of computer virtualization. Entire network equipment like sender or receiver or parts thereof or part of their functions can be virtualized using software building blocks that may connect, or interact, to create communication services. A virtualized network function of e.g. a sender or receiver may include at least one virtual machine running different software and processes, on top of standard high-volume servers, switches and storage, or a cloud computing infrastructure, instead of having customized hardware appliances for each network function. As such a sender or receiver function may be implemented in a computer program using a computer program product embodied on a non-transitory computer readable medium for performing operations, wherein the computer program product comprises instructions, that when executed by a processor, perform the operations of the specific base station, eNodeB, network node, MME (Mobility Management Entity) and/or UE function.

The methods described herein relate to digital signal processing and could thus be implemented using a processor like a digital signal processor, or the like. At least some of the functions relate to baseband processing and could thus be implemented using a transceiver, e.g. a baseband transceiver. The radio module is e.g. a radio module, or a remotely located so called RRH (Remote Radio Head). The constellation with a RRH is often used in connection with a so called NFV (Network Functions Virtualization) implementation, where a substantial part of processing is centralized in a server farm with a plurality of processors and a plurality of memory, and the radio specific up-conversion, the antenna and the digital-to-analog converter for data transmission in downlink to the user equipment and the analog-to-digital converter for receiving data from the user equipment in uplink is remotely located. The radio module is also called radio frontend and includes e.g. a digital-to-analog converter, a low-pass filter, a mixer, a local oscillator, a power amplifier and an antenna. The local oscillator generates the radio frequency which is mixed on the processed data. The aforementioned modules/functions could be placed in serial order. Some modules might be not be used or replaced by others dependent on the technology used. For MIMO or massive MIMO some modules need to be duplicated, e.g. a plurality of antennas is used instead of one and corresponding amplifiers, etc. Additional modules might be added for performing und/or supporting specific functions as e.g. beamforming, CoMP (coordinated multipoint), eICIC (enhanced inter-cell interference control), or the like. User equipment (UE) could be implemented as a device with a radio module, e.g. smartphone, tablet, smartwatch, sensor, actuator, equipment inside a vehicle, machine-to-machine equipment, or else. The radio communications network RCN is an OFDM (Orthogonal Frequency Division Multiplex) type network, e.g. UF-OFDM, F-OFDM, ZT-s-OFDM, P-OFDM, FC-OFDM, or another multi-carrier network, e.g. FS-FBMC, QAM-FBMC, etc. E.g. QAM - Quadrature Amplitude Modulation and/or QPSK - Quadrature Phase Shift Keying are used as modulation technique. The radio network RCN allocates resources using a scheduler and a time-frequency-resource grid, a t-f-resource. The t-f-resource includes time slots and associated subcarriers. The subcarriers are e.g. grouped in frequency subbands. A subband is assigned at least one subband parameter. A subband parameter is e.g. subcarrier spacing, other parameters are e.g. symbol duration, time overhead, time overhead type like zero postfix or cyclic prefix, windowing or filtering parameters. Dependent on the assigned or selected parameters the subband is characterized for a specific transmission type and is in particular suitable for the transmission of specific services. A service is e.g. eMBB (enhanced mobile broadband), mMTC (massive machine-type-communication), URLLC (ultra reliable low latency communication), vehicle-to-vehicle communication, voice, video, etc. An allocated physical resource block thus assigns a dedicated time slot associated with one or more subcarriers or a subband to a data packet. A physical resource block assigns one time slot to a subcarrier. A time slot is e.g. called a TTI (transmission time interval). The period of time could e.g. be one or more time slots. Data and control signals are transmitted using physical channels, e.g. physical downlink shared channel, physical downlink control channel, common control physical channel. Further data and control signals could be transmitted using broadcast channel, paging channel, multicast channel.

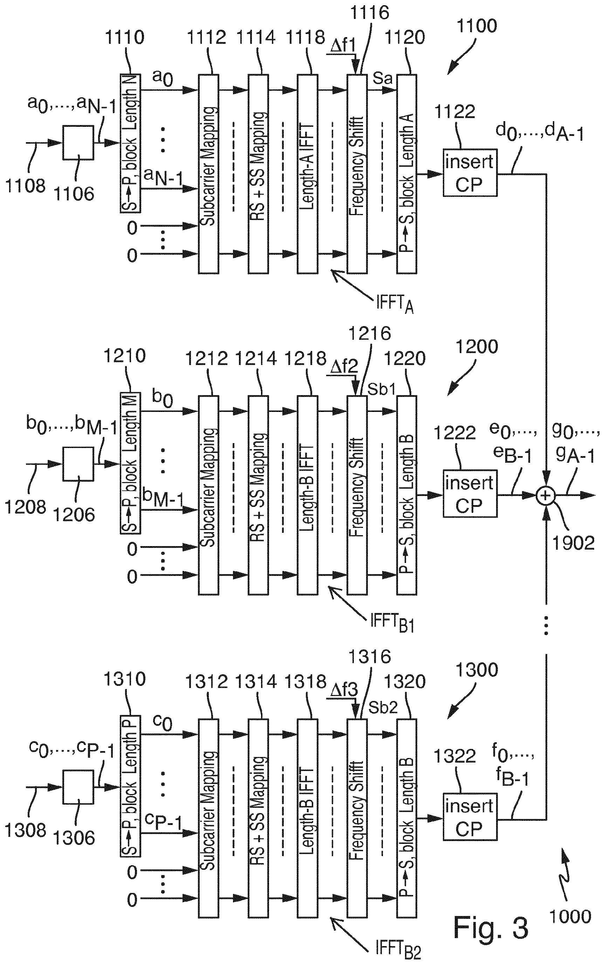

Figure 3 shows a schematic block diagram of the ODFM-modulator 1000 with a plurality of processing chains 1100, 1200, 1300. Of course, further processing chains are possible. The third processing chain 1100 is described in detail in the following, wherein the further processing chains are similar to the processing chain 1100 but may differ at least in the used respective block lengths and frequency offsets. A block 1106 determines a third ingress modulation-symbol stream $a_0,...,a_{N-1}$ in dependence on a third ingress data stream 1108. The block 1106 may comprise an QAM-modulator (Quadrature Amplitude Modulation) and/or an QPSK-modulator (Quadrature Phase Shift Keying), a channel pre-coder, and/or for further processing entities. A serial-to-parallel converter 1110 converts the third ingress modulation-symbol stream $a_0,...a_{N-1}$ from a parallel to a serial symbol stream. The parallelized third ingress modulation-symbol stream $a_0,...a_{N-1}$ is applied to a subcarrier mapper 1112. A mapper 1114 maps reference symbols and/or synchronisation symbols to the modulation-symbol stream. The modulation-symbol stream determined by the mapper 1114 is applied to an inverse Fast Fourier Transform block 1118 to determine the third inverse Fast Fourier Transform $IFFT_A$. A frequency shifter 1116 shifts the applied third inverse Fast Fourier Transform $IFFT_A$ by the applied third frequency offset $\Delta f1$ to determine third frequency-shifted samples Sa. The third frequence-shifted samples Sa are serialized by means of a parallel-to-serial converter 1120 and applied to a cyclic prefix (CP) inserter 1122 to determine the third egress sample stream $d_0,...,d_{A-1}$. The cyclic prefix inserter 1122 also can be omitted.

The processing chains 1200, 1300 differ from the processing chain 1100 as described above in the following: The ingress data streams 1208 and 1308 and 1108 are mutually different with respect to their contents. The first block length B of the first and second inverse Fast Fourier Transform $IFFT_{B1}$, $IFFT_{B2}$ multiplied with a respective integer factor K, also termed K-factor, equal the main block length A of the third forward Fast Fourier Transform $IFFT_A$. The block lengths N, M and P of the serial-to-parallel converters 1110, 1210 and 1310 are equal or smaller than the respective block length A, B of the corresponding inverse Fast Fourier Transform block 1118, 1218, 1318.

Given the largest block length of the fourier transform in the sense of the main block length A, each processing chain has to fulfil the following equation (1) with a block length bl and the corresponding K-factor K.

$$bl * K = A \qquad (1)$$

For cellular radio communications network RCN with the main block length A of 2048 also legacy LTE devices can be attended. In this case the subcarrier spacing f0 providing a fixed subcarrier spacing grid for all of the other processing chains is 15 kHz. Of course, the main block length A can be chosen differently, however loosing compatibility with legacy LTE devices. The sample time Ts for each K-Factor system can be determined according to equation (2).

$$Ts(K) = 1 / (bl(K) * f0) \qquad (2)$$

For applications with a demand for low energy consumption and short symbol rates, the second radio device UE may only comprise processing chains with a high K-Factor, particularly a K-factor K greater than 1.

The following equations (3) to (6) show that the modulation and demodulation scheme proposed in this description still provides that the subcarriers are orthogonal. Equation (3) provides the forward Fast Fourier Transform FFT_R of block length R with the parameter k. In equation (4) the right hand term is separated into two components X_I and X_II each representing Fast Fourier Transforms. Equation (5) comprises a parameter transform from parameter k of equation (4) to the parameter 2*u. Equation (6) represents equation (5) in a rewritten form. Equations (5) and (6) provide two fourier transforms XI(u) and XII(u) with a block length of R/2 in comparison with the Fast Fourier Transform of block length R in equations (3) and (4). Consequently, subcarrier orthogonality is maintained while FFT block lengths are used that comply with the K-factor scheme described in equation (1).

$$FFT_R(k) = \sum_{n=0}^{R-1} x(n) * e^{-j\frac{2\pi}{R}kn}$$

(3)

$$FFT_R(k) = \underbrace{\sum_{r=0}^{\frac{R}{2}-1} x(r) * e^{-j\frac{2\pi}{R}kr}}_{X_I(k)} + \underbrace{\sum_{r=\frac{R}{2}}^{R-1} x(r) * e^{-j\frac{2\pi}{R}kr}}_{X_{II}(k)}$$

(4)

$$FFT_R(2u) = \underbrace{\sum_{r=0}^{\frac{R}{2}-1} x(r) * e^{-j\frac{2\pi}{R}2ur}}_{X_I(u)} + \underbrace{\sum_{r=\frac{R}{2}}^{R-1} x(r) * e^{-j\frac{2\pi}{R}2ur}}_{X_{II}(u)}$$

(5)

$$FFT_R(2u) = \underbrace{\sum_{r=0}^{\frac{R}{2}-1} x(r) * e^{-j\frac{2\pi}{\frac{R}{2}}ur}}_{X_I(u)} + \underbrace{\sum_{r=\frac{R}{2}}^{R-1} x(r) * e^{-j\frac{2\pi}{\frac{R}{2}}ur}}_{X_{II}(u)}$$

(6)

The following table 1 shows possible configurations for processing chains of the OFDM-modulator 1000 and the OFDM-demodulator 2000.

Table 1

| FFT Length | Num N of PRBs | K-Factor | N * K | Symbol Length in μs | Bandwidth | Integration in LTE 20MHz |
|---|---|---|---|---|---|---|
| 16 | 1 | 128 | 128 | 0,5 | 23,04MHz | No |

(continued)

| FFT Length | Num N of PRBs | K-Factor | N * K | Symbol Length in μs | Bandwidth | Integration in LTE 20MHz |
|---|---|---|---|---|---|---|
| 32 | 1 | 64 | 64 | 1,0 | 11,52MHz | Yes |
| 64 | 1 | 32 | 32 | 2,1 | 5,76MHz | Yes |
|  | 2 |  | 64 |  | 11,52MHz |  |
|  | 3 |  | 96 |  | 17,28MHz |  |
| 128 | 1 | 16 | 16 | 4,2 | 2,88MHz | Yes |
|  | 2 |  | 32 |  | 5,76MHz |  |
|  | 3 |  | 48 |  | 8,64MHz |  |
|  | 4 |  | 64 |  | 11,52MHz |  |
|  | 5 |  | 80 |  | 14,40MHz |  |
|  | 6 |  | 96 |  | 17,28MHz |  |
| 256 | 1 | 8 | 8 | 8,33 | 1,44MHz | Yes |
|  | 2 |  | 16 |  | 2,88MHz |  |
|  | 3 |  | 24 |  | 4,32MHz |  |
|  | 4 |  | 32 |  | 5,76MHz |  |
|  | 5 |  | 40 |  | 7,20MHz |  |
|  | 6 |  | 48 |  | 8,64MHz |  |
|  | 7 |  | 56 |  | 10,08MHz |  |
|  | 8 |  | 64 |  | 11,52MHz |  |
|  | 9 |  | 72 |  | 12,96MHz |  |
|  | 10 |  | 80 |  | 14,40MHz |  |
|  | 11 |  | 88 |  | 15,84MHz |  |
|  | 12 |  | 96 |  | 17,28MHz |  |
| 512 | 1 | 4 | 4 | 16,65 | 0,72MHz | Yes |
|  | 2 |  | 8 |  | 1,44MHz |  |
|  | 3 |  | 12 |  | 2,16MHz |  |
|  | 4 |  | 16 |  | 2,88MHz |  |
|  | 5 |  | 20 |  | 3,60MHz |  |
|  | 6 |  | 24 |  | 4,32MHz |  |
|  | 7 |  | 28 |  | 5,04MHz |  |
|  | 8 |  | 32 |  | 5,76MHz |  |
|  | 9 |  | 36 |  | 6,48MHz |  |
|  | 10 |  | 40 |  | 7,20MHz |  |
|  | 11 |  | 44 |  | 7,92MHz |  |
|  | 12 |  | 48 |  | 8,64MHz |  |
|  | 13 |  | 52 |  | 9,36MHz |  |
|  | 14 |  | 56 |  | 10,08MHz |  |
|  | 15 |  | 60 |  | 10,80MHz |  |
|  | 16 |  | 64 |  | 11,52MHz |  |
|  | 17 |  | 68 |  | 12,24MHz |  |
|  | 18 |  | 72 |  | 12,96MHz |  |
|  | 19 |  | 76 |  | 13,68MHz |  |
|  | 20 |  | 80 |  | 14,40MHz |  |
|  | 21 |  | 84 |  | 15,12MHz |  |
|  | 22 |  | 88 |  | 15,84MHz |  |
|  | 23 |  | 92 |  | 16,56MHz |  |
|  | 24 |  | 96 |  | 17,28MHz |  |
|  | 25 |  | 100 |  | 18,00MHz |  |

(continued)

| FFT Length | Num N of PRBs | K-Factor | N * K | Symbol Length in $\mu s$ | Bandwidth | Integrat ion in LTE 20MHz |
|---|---|---|---|---|---|---|
| 1024 | 1 | 2 | 2 | 33,3 | 0,36MHz | Yes |
| | 2 | | 4 | | 0,72MHz | |
| | 3 | | 6 | | 1,08MHz | |
| | 4 | | 8 | | 1,44MHz | |
| | 5 | | 10 | | 1,80MHz | |
| | 6 | | 12 | | 2,16MHz | |
| | 7 | | 14 | | 2,52MHz | |
| | 8 | | 16 | | 2,88MHz | |
| | 9 | | 18 | | 3,24MHz | |
| | 10 | | 20 | | 3,60MHz | |
| | 11 | | 22 | | 3,96MHz | |
| | 12 | | 24 | | 4,32MHz | |
| | 13 | | 26 | | 4,68MHz | |
| | 14 | | 28 | | 5,04MHz | |
| | 15 | | 30 | | 5,40MHz | |
| | 16 | | 32 | | 5,76MHz | |
| | 17 | | 34 | | 6,12MHz | |
| | 18 | | 36 | | 6,48MHz | |
| | 19 | | 38 | | 6,84MHz | |
| | 20 | | 40 | | 7,20MHz | |
| | 21 | | 42 | | 7,56MHz | |
| | 22 | | 44 | | 7,92MHz | |
| | 23 | | 46 | | 8,28MHz | |
| | 24 | | 48 | | 8,64MHz | |
| | 25 | | 50 | | 9,00MHz | |
| LTE: 2048 | 1 ... 100 | 1 | 1 ... 100 | 66, 6 | 0, 18...18MH z | Yes |

In table 2 the surviving subcarrier distance in kHz depending on the K factor is shown. The subcarrier distance means that for a system with the corresponding K factor a multiple of the subcarrier distance survive in the frequency range. Consequently, with a rising K factor also the subcarrier distance rises and the corresponding frequency space can be used according to the methods described herein. Therefore, shorter symbol times result in an increase of capacity, if all subcarriers are used.

Table 2

| K-factor | Subcarrier distance in kHz for surviving subcarriers |
|---|---|
| 1 | 15 |
| 2 | 30 |
| 4 | 40 |
| 8 | 120 |
| 16 | 240 |

The absolute value of the difference between first and second frequency offset $\Delta f2$, $\Delta f3$ is in a range between and including one subcarrier and K-1 subcarriers.

An adder 1902 adds the first, second and third egress sample streams $e_0,...,e_{B-1}$, $f_0,...,f_{B-1}$, $d_0,...,d_{A-1}$, to a sum, namely the joined sample stream $g_0,...g_{A-1}$. The joined sample stream $g_0,..,g_{A-1}$ is applied to a digital-to-analog converter of the respective radio module R1, R2 and subsequently up-converted to a carrier frequency higher than respective subcarrier frequencies.

The wording ingress and egress has the meaning that a respective ingress stream is located toward an input side of the processing chain and that an egress stream is located toward an output side of the processing chain. Therefore, the ingress stream may differ from an actual input stream at the beginning of the processing chain. The same applies to the egress stream.

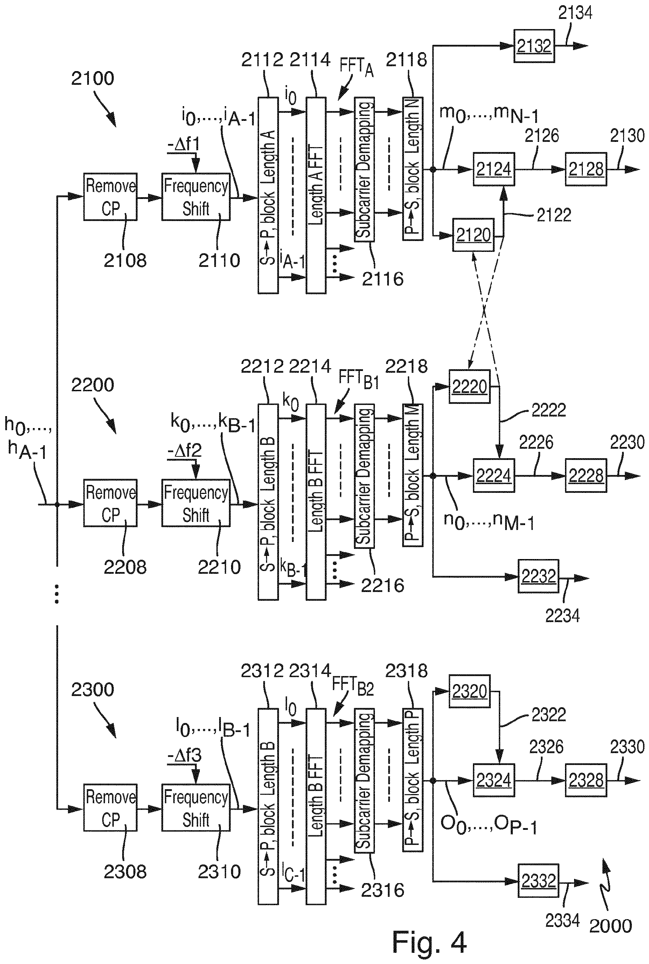

The serial-to-parallel converters and the parallel-to-serial converters in figures 3 and 4 are arranged at an exemplary position. Of course these converters can be arranged at other positions to optimize the respective processing chain.

Figure 4 shows schematic block diagram of an OFDM-demodulator 2000 with a plurality of processing chains 2100, 2200, 2300. Of course, further processing chains are possible. The processing chain 2100 is described in detail in the following, wherein the further processing chains are similar to the processing chain 2100. A cyclic prefix remover 2108 removes a cyclic prefix CP. The cyclic prefix remover 2108 can also be omitted. The frequency shifter 2110 back-shifts the down-converted sample stream $h_0,...,h_{A-1},...$ not comprising the cyclic prefix in dependence on the supplied third frequency offset $\Delta f1$. The frequency shifter 2110 determines the third ingress sample stream $i_0,...,i_{A-1}$, which is parallelized by a serial-to-parallel converter 2112. A forward Fast Fourier Transform block 2114 determines the third forward Fast Fourier Transform $FFT_A$ of the further block size A in dependence on the parallelised ingress sample stream $i_0,...,i_{A-1}$. A demapper 2116 demaps the subcarriers. A parallel-to-serial converter 2118 of block length N determines the third egress demodulation-symbol stream $m_0,...,m_{N-1}$ in dependence on the third forward Fast Fourier Transform $FFT_A$. A channel estimator 2120 determines a channel estimate 2122 in dependence on reference symbols contained in the third egress demodulation-symbol stream $m_0,...,m_{V-1}$. An equalizer 2124 determines an equalized egress modulation-symbol stream 2126 in dependence on the third egress demodulation-symbol stream $m_0,...,m_{N-1}$ and in dependence on the channel estimate 2122. As indicated with arrows the channel estimates 2122 and 2222 can be exchanged, wherein for example the estimator 2120 receives the channel estimate 2222. A block 2128 determines an egress data stream 2130 in dependence on the equalized egress demodulation-symbol stream 2126. The channel estimator 2120 and the equalizer 2124 are only exemplary and may comprise other taps regarding the respective input and output symbol streams. The block 2128 comprises a QAM-demodulator (Quadrature Amplitude Modulation) and/or a QPSK-demodulator (Quadrature Phase Shift Keying), a channel de-coder, and/or further processing entities. The egress data stream 2130 equals the ingress data stream 1108 in figure 3. A correlator 2132 detects a synchronization symbol in the third egress demodulation-symbol stream $m_0,...,m_{N-1}$ and determines a synchronisation state 2134.

The processing chains 2200, 2300 differ from the processing chain 2100 as described above in the following: The egress data streams 2130 and 2230 and 2330 are mutually different with respect to their contents. The block length B of the first and second forward Fast Fourier Transform $FFT_{B1}$ $FFT_{B2}$ multiplied with the K-factor equal the main block length A.

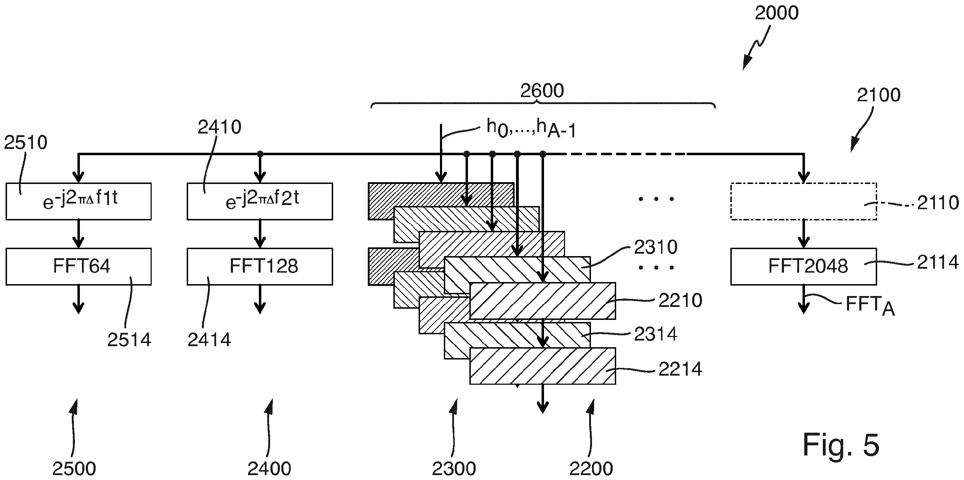

Figure 5 shows a schematic block diagram of the ODFM-demodulator 2000. According to the block 2110 no frequency back-shift is applied to the down-converted sample stream $h_0,...,h_{A-1},...$ and the third forward Fast Fourier transform $FFT_A$ is determined in block 2114. Further processing chains 2400, 2500 operate with block lengths of 128 and 64, respectively, and with respective frequency offsets.

A processing chain group 2600 comprises the processing chains 2200, 2300 and further processing chains. The processing chains of the group 2600 are characterized by using the same block length B, in this example with a value of 128, and a frequency offset scheme. According to the frequency offset scheme the frequency offsets for the processing chains of the processing chain group 2600 are determined on a subcarrier basis in order to use unused subcarrier subspaces of a single one of the processing chains.

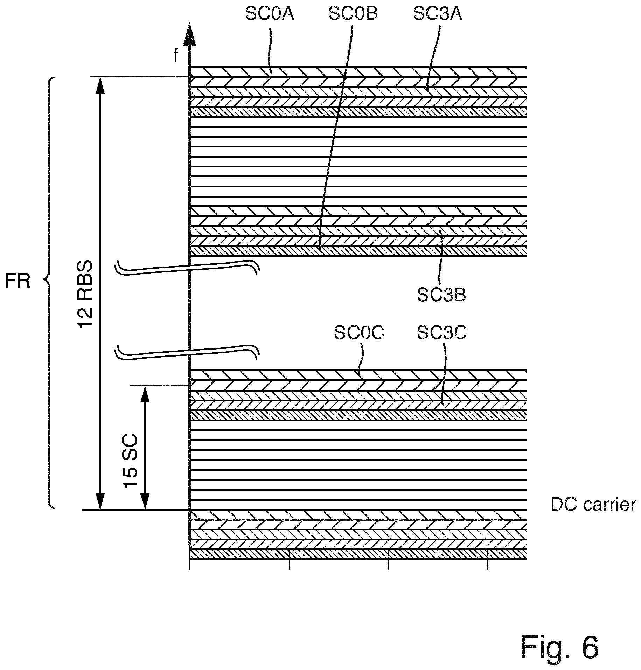

Figure 6 illustrates schematically a frequency offset scheme on subcarrier basis for the block length 128. As the block length 128 corresponds to a K-factor of 16, operating a single processing chain with a K-factor of 16 in the OFDM-modulator 1000 will result in used subcarriers mod(j, 16) = 0 in a frequency range FR, wherein j is the subcarrier index. In the same frequency range FR the remaining subcarriers are used by means of at least one further processing chain in the OFDM-modulator 1000 and the ODFM-demodulator 2000.

The OFDM-modulator 1000 determines the first frequency offset $\Delta f2$ for the first inverse Fast Fourier Transform $IFFT_{B1}$, wherein the first inverse Fast Fourier Transform $IFFT_{B1}$ occupies a first subcarrier subset sc0A, sc0B, sc0C in the subcarrier range SR. The second frequency offset $\Delta f3$ for the second inverse Fast Fourier Transform $IFFT_{B2}$ is determined, so that the second inverse Fast Fourier Transform $IFFT_{B2}$ occupies a second subcarrier subset sc3A, sc3B, sc3C in the subcarrier range SR. The first and second frequency offsets $\Delta f2$, $\Delta f3$ in the shown example of figure 6 differ by three subcarriers. Further subcarrier subsets are shown in the frequency range and exemplify a comb-like inverleaving of the subsets. Moreover, all the subsets of the frequency offset scheme use mutually different subcarriers in the frequency range FR. In an embodiment guard bands in the sense of one or more unused subcarriers are arranged between subcarriers in the frequency range FR.

The functions of the various elements shown in the FIGs., including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.  An OFDM-modulator (1000) for operating in a radio device (BS; UE) of a cellular radio communications network (RCN), wherein the OFDM-modulator (1000) comprises a processor (P1; P2) and a memory (M1; M2) being configured to:

    - receive a first and second ingress modulation-symbol stream ($b_0,...,b_{M-1}, c_0,...,c_{P-1}$);
    - receive a third ingress modulation-symbol stream ($a_0,...,a_{N-1}$);
    - determine a first and second inverse Fast Fourier Transform ($IFFT_{B1}$, $IFFT_{B2}$) of the same first block length (B) in dependence on the first and second ingress modulation-symbol stream ($b_0,...,b_{M-1}, c_0,...,c_{P-1}$), respectively;
    - determine a third inverse Fast Fourier Transform ($IFFT_A$) of a second block length (A) in dependence on the third ingress modulation-symbol stream ($a_0,...,a_{N-1}$), wherein the first block length (B) multiplied with an integer factor (K) is equal to the second block length (A) ;
    - determine first and second frequency-shifted samples (Sb2; Sb3) of different frequency offsets ($\Delta f2$, $\Delta f3$) to a subcarrier frequency (DC) in dependence on the first and second inverse Fast Fourier Transform ($IFFT_{B1}$, $IFFT_{B2}$), respectively, wherein the different frequency offsets ($\Delta f2$, $\Delta f3$) are determined on a subcarrier basis in order to use subcarrier subspaces;
    - determine third frequency-shifted samples (Sa) of a third frequency offset ($\Delta f1$) to the subcarrier frequency (DC) in dependence on the third inverse Fast Fourier Transform ($IDFT_A$);
    - determine the first frequency offset ($\Delta f2$) for the first inverse Fast Fourier Transform ($IFFT_{B1}$), wherein the first inverse Fast Fourier Transform ($IFFT_{B1}$) occupies a first subcarrier subset in a subcarrier range (SR);
    - determine the second frequency offset ($\Delta f3$) for the second inverse Fast Fourier Transform ($IFFT_{B2}$), wherein the second inverse Fast Fourier Transform ($IFFT_{B2}$) occupies a second subcarrier subset in the subcarrier range (SR);
    - wherein the first and second subcarrier subsets are interleaved comb-like;
    - determine a first and second egress sample stream ($e_0,...,e_{B-1}, f_0,...,f_{B-1}$) in dependence on the first and second frequency-shifted samples (Sb2; Sb3), respectively;
    - determine a third egress sample stream ($c_0,...,c_{A-1}$) in dependence on the third frequency-shifted samples (Sa) ; and
    - determine a joined sample stream ($g_0,...g_{B-1}$) in dependence on the first, second and third egress sample stream ($e_0,...,e_{B-1}, f_0,...,f_{B-1}, c_0,...,c_{A-1}$) for up-converting the joined sample stream ($g_0,...,g_{B-1}$) to a carrier frequency higher than respective subcarrier frequencies.

2.  The OFDM-modulator (1000) according to claim 1,

    - wherein the same first block length (B) of the first and second inverse Fast Fourier Transform ($IFFT_B$) multiplied with an integer factor (K) greater than one equals a main block length (A).

3.  The OFDM-modulator (1000) according to claim 2,

    - wherein the main block length (A) equals 2048.

4. An OFDM-demodulator (2000) for operating in a device (BS; UE) of a cellular radio communications network (RCN), wherein the OFDM-demodulator (2000) comprises a processor (P1; P2) and a memory (M1; M2) being configured to:

- receive a down-converted sample stream ($h_0$,...,$h_{B-1}$...);
- determine a first and second ingress sample stream ($k_0$,...$k_{B-1}$, $l_0$,...,$l_{B-1}$) of the down-converted sample stream ($h_0$,...,$h_{B-1}$,...) of the same first block length (B) and of different frequency offsets (-$\Delta$f2, -$\Delta$f3) to a subcarrier frequency (DC), respectively;
- wherein the first ingress sample stream ($k_0$,...,$k_{B-1}$) comprises a first inverse Fast Fourier Transform (IFFT$_{B1}$) occupying a first subcarrier subset in a subcarrier range (SR);
- wherein the second ingress sample stream ($l_0$,...,$l_{B-1}$) comprises a second inverse Fast Fourier Transform (IFFT$_{B2}$) occupying a second subcarrier subset in the subcarrier range (SR);
- wherein the first and second subcarrier subsets are interleaved comb-like;
- determine a third ingress sample stream ($i_0$,...,$i_{A-1}$) of the down-converted sample stream ($h_0$,...,$h_{A-1}$) of a second block length (A) and of a third frequency offset ($\Delta$f1), wherein the first block length (B) multiplied with an integer factor (K) is equal to the second block length (A);
- determine a first and second forward Fast Fourier Transform (FFT$_{B1}$, FFT$_{B2}$) of the same first block length (B) in dependence on the first and second ingress sample stream ($k_0$,...,$k_{B-1}$, $l_0$,...,$l_{B-1}$), respectively;
- determine a third forward Fast Fourier Transform (DFT$_A$) of the further block length (A) in dependence on the third ingress sample stream ($i_0$,...,$i_{A-1}$);
- determine a first and second egress demodulation-symbol stream ($n_0$,...,$n_{M-1}$, $o_0$,...$o_{P-1}$) in dependence on the first and second forward Fast Fourier Transform (FFT$_{B1}$, FFT$_{B2}$), respectively; and
- determine a third egress demodulation-symbol stream ($m_0$,...$n_{M-1}$) in dependence on the third forward Fast Fourier Transform (DFT$_A$).

5. The OFDM-demodulator (2000) according to claim 4,

- wherein the same first block length (B) of the first and second forward Fast Fourier Transform (DFTB) multiplied with an integer factor (K) greater than one equals a main block length (A).

6. The OFDM-demodulator (2000) according to claim 5,

- wherein the main block length (A) equals 2048.

7. A radio device (BS; UE) for operating in a cellular radio communications network (RCN), wherein the radio device (BS; UE) comprises:

- the OFDM-modulator (1000) according to one of the claims 1 to 3, wherein the radio device (BS; UE) comprises a radio module (R1; R2) and an antenna (A1; A2) being configured to:
- up-convert the joined sample stream ($g_0$,...,$g_{A-1}$) to the carrier frequency higher than respective subcarrier frequencies;
- transmit the joined sample stream ($g_0$,...,$g_{A-1}$) on a first radio channel (ch1; ch2); and/or wherein the radio device (BS; UE) comprises the OFDM-demodulator (2000) according to one of the claims 4 to 6, wherein the radio device (BS; UE) comprises the radio module (R1; R2) and the antenna (A1;A2) being configured to:
- receive a radio signal from a second channel (ch2; ch1) ;
- down-convert the radio signal to the ingress sample stream ($h_0$,...,$h_{A-1}$,...).

8. A method to operate an OFDM-modulator (1000) for operating in a radio device (BS; UE) of a cellular radio communications network (RCN), wherein the method comprises:

- receiving a first and second ingress modulation-symbol stream ($b_0$,$b_{M-1}$, $c_0$,...,$c_{P-1}$);
- receive a third ingress modulation-symbol stream ($a_0$,...,$a_{N-1}$);
- determining a first and second inverse Fast Fourier Transform (IFFT$_{B1}$, IFFT$_{B2}$) of the same first block length (B) in dependence on the first and second ingress modulation-symbol stream ($b_0$,...,$b_{M-1}$, $c_0$,...,$c_{P-1}$), respectively;
- determining a third inverse Fast Fourier Transform (IFFT$_A$) of a second block length (A) in dependence on the third ingress modulation-symbol stream ($a_0$, $a_{N-1}$), wherein the first block length (B) multiplied with an integer factor (K) is equal to the second block length (A) ;
- determining first and second frequency-shifted samples (Sb2; Sb3) of different frequency offsets to a subcarrier frequency (DC) in dependence on the first and second inverse Fast Fourier Transform (IFFT$_{B1}$, IFFT$_{B2}$), respectively;

- determining the first frequency offset ($\Delta f2$) for the first inverse Fast Fourier Transform ($IFFT_{B1}$), wherein the first inverse Fast Fourier Transform ($IFFT_{B1}$) occupies a first subcarrier subset in a subcarrier range (SR);
- determining the second frequency offset ($\Delta f3$) for the second inverse Fast Fourier Transform ($IFFT_{B2}$), wherein the second inverse Fast Fourier Transform ($IFFT_{B2}$) occupies a second subcarrier subset in the subcarrier range (SR);
- wherein the first and second subcarrier subsets are interleaved comb-like;
- determining third frequency-shifted samples (Sa) of a third frequency offset ($\Delta f1$) to the subcarrier frequency (DC) in dependence on the third inverse Fast Fourier Transform ($IDFT_A$);
- determining a first and second egress sample stream ($e_0,...,e_{B-1}$, $f_0,...,f_{B-1}$) in dependence on the first and second frequency-shifted samples (Sb2; Sb3), respectively;
- determining a third egress sample stream ($c_0,...,c_{A-1}$) in dependence on the third frequency-shifted samples (Sa) ; and
- determing a joined sample stream ($g_0,...g_{B-1}$) in dependence on the first, second and third egress sample stream ($e_0,...,e_{B-1}$, $f_0,...,f_{B-1}$, $c_0,...,c_{A-1}$) for up-converting the joined sample stream ($g_0,...g_{B-1}$) to a carrier frequency higher than respective subcarrier frequencies.

**9.** A method to operate an OFDM-demodulator (2000) for operating in a device (BS; UE) of a cellular radio communications network (RCN), wherein the method comprises:

- receiving a down-converted sample stream ($h_0,...,h_{B-1},...$);
- determining a first and second ingress sample stream ($k_0,...,k_{B-1}$, $l_0,...,l_{B-1}$) of the down-converted demodulation-symbol stream ($h_0,...,h_{B-1},...$) of the same first block length (B) and of different frequency offset ($-\Delta f2$, $-\Delta f3$) to a subcarrier frequency (DC), respectively;
- wherein the first ingress sample stream ($k_0,...,k_{B-1}$) comprises a first inverse Fast Fourier Transform ($IFFT_{B1}$) occupying a first subcarrier subset in a subcarrier range (SR);
- wherein the second ingress sample stream ($l_0,...,l_{B-1}$) comprises a second inverse Fast Fourier Transform ($IFFT_{B2}$) occupying a second subcarrier subset in the subcarrier range (SR);
- wherein the first and second subcarrier subsets are interleaved comb-like;
- determining a third ingress sample stream ($i_0,...,i_{A-1}$) of the down-converted sample stream ($h_0,...,h_{A-1}$) of a second block length (A) and of a third frequency offset ($\Delta f1$), wherein the first block length (B) multiplied with an integer factor (K) is equal to the second block length (A);
- determining a first and second forward Fast Fourier Transform ($FFT_{B1}$, $FFT_{B2}$) of the same block length (B) in dependence on the first and second ingress sample stream ($k_0,...,k_{B-1}$, $l_0,...,l_{B-1}$), respectively;
- determine a third forward Fast Fourier Transform ($DFT_A$) of the further block length (A) in dependence on the third ingress sample stream ($i_0,...,i_{A-1}$);
- determining a first and second egress demodulation-symbol stream ($n_0,...,n_{M-1}$, $o_0,...o_{P-1}$) in dependence on the first and second forward Fast Fourier Transform ($FFT_{B1}$, $FFT_{B2}$), respectively; and
- determine a third egress demodulation-symbol stream ($m_0,...,n_{M-1}$) in dependence on the third forward Fast Fourier Transform ($DFT_A$).

## Patentansprüche

**1.** OFDM-Modulator (1000) für den Betrieb in einer Funkvorrichtung (BS; UE) eines zellularen Funkkommunikationsnetzes (RCN), wobei der OFDM-Modulator (1000) einen Prozessor (P1; P2) und einen Speicher (M1; M2) umfasst, die ausgestaltet sind zum:

- Empfangen eines ersten und eines zweiten Eingangsmodulationssymbolstroms ($b_0$, ..., $b_{M-1}$, $c_0$, ..., $c_{P-1}$);
- Empfangen eines dritten Eingangsmodulationssymbolstroms ($a_0$, ..., $a_{N-1}$);
- Bestimmen einer ersten und zweiten inversen schnellen Fourier-Transformation ($IFFT_{B1}$, $IFFT_{B2}$) mit der gleichen ersten Blocklänge (B) in Abhängigkeit von dem ersten beziehungsweise zweiten Eingangsmodulationssymbolstrom ($b_0$, ..., $b_{M-1}$, $c_0,...$, $c_{P-1}$);
- Bestimmen einer dritten inversen schnellen Fourier-Transformation ($IFFT_A$) mit einer zweiten Blocklänge (A) in Abhängigkeit von dem dritten Eingangsmodulationssymbolstrom ($a_0$, ..., $a_{N-1}$), wobei die erste Blocklänge (B), multipliziert mit einem ganzzahligen Faktor (K), gleich der zweiten Blocklänge (A) ist;
- Bestimmen erster und zweiter frequenzverschobener Abtastungen (Sb2; Sb3) mit verschiedenen Frequenzversatzen ($\Delta f2$, $\Delta f3$) zu einer Unterträgerfrequenz (DC) in Abhängigkeit von der ersten beziehungsweise der zweiten inversen schnellen Fourier-Transformation ($IFFT_{B1}$, $IFFT_{B2}$), wobei die verschiedenen Frequenzversatze ($\Delta f2$, $\Delta f3$) auf einer Unterträgerbasis bestimmt werden, um Unterträger-Unterräume zu verwenden;
- Bestimmen dritter frequenzverschobener Abtastungen (Sa) mit einem dritten Frequenzversatz ($\Delta f1$) zur Unterträgerfrequenz (DC) in Abhängigkeit von der dritten inversen schnellen Fourier-Transformation ($IDFT_A$),
- Bestimmen des ersten Frequenzversatzes ($\Delta f2$) für die erste inverse schnelle Fourier-Transformation ($IFFT_{B1}$) wobei die erste inverse schnelle Fourier-Transformation ($IFFT_{B1}$) eine erste Unterträger-Untermenge in einem Unterträgerbereich (SR) einnimmt;
- Bestimmen des zweiten Frequenzversatzes ($\Delta f3$) für die zweite inverse schnelle Fourier-Transformation ($IFFT_{B2}$), wobei die zweite inverse schnelle Fourier-Transformation ($IFFT_{B2}$) eine zweite Unterträger-Untermenge im Unterträgerbereich (SR) einnimmt;
- wobei die erste und die zweite Unterträger-Untermenge kammartig verschachtelt sind;
- Bestimmen eines ersten und zweiten Ausgangsabtaststroms ($e_0$, ..., $e_{B-1}$, $f_0$, ..., $f_{B-1}$) in Abhängigkeit von den ersten beziehungsweise den zweiten frequenzverschobenen Abtastungen (Sb2; Sb3);
- Bestimmen eines dritten Ausgangsabtaststroms ($C_o$, ..., $C_{A-1}$) in Abhängigkeit von den dritten frequenzverschobenen Abtastungen (Sa); und
- Bestimmen eines verbundenen Abtaststroms ($g_0$, ..., $g_{B-1}$) in Abhängigkeit von dem ersten, zweiten und dritten Ausgangsabtaststrom ($e_0$, ..., $e_{B-1}$, $f_0$, ..., $f_{B-1}$, $c_0$, ..., $c_{A-1}$) zum Aufwärtswandeln des verbundenen Abtaststroms ($g_0$, ..., $g_{B-1}$) auf eine Trägerfrequenz, die höher ist als entsprechende Unterträgerfrequenzen.

2.  OFDM-Modulator (1000) nach Anspruch 1,

- wobei die gleiche erste Blocklänge (B) der ersten und der zweiten inversen schnellen Fourier-Transformation ($IFFT_B$), multipliziert mit einem ganzzahligen Faktor (K) größer als eins, gleich einer Hauptblocklänge (A) ist.

3.  OFDM-Modulator (1000) nach Anspruch 2,

- wobei die Hauptblocklänge (A) gleich 2048 ist.

4.  OFDM-Demodulator (2000) für den Betrieb in einer Vorrichtung (BS; UE) eines zellularen Funkkommunikationsnetzes (RCN), wobei der OFDM-Demodulator (2000) einen Prozessor (P1; P2) und einen Speicher (M1; M2) umfasst, die ausgestaltet sind zum:

- Empfangen eines abwärtsgewandelten Abtaststroms ($h_0$, ..., $h_{B-1}$, ...);
- Bestimmen eines ersten beziehungsweise eines zweiten Eingangsabtaststroms ($k_0$, ..., $k_{B-1}$, $l_0$, ..., $l_{B-1}$) des abwärtsgewandelten Abtaststroms ($h_0$, ..., $h_{B-1}$, ...) mit der gleichen ersten Blocklänge (B) und mit verschiedenen Frequenzversatzen (-$\Delta f2$, -$\Delta f3$) zu einer Unterträgerfrequenz (DC) ;
- wobei der erste Eingangsabtaststrom ($k_0$, ..., $k_{B-1}$) eine erste inverse schnelle Fourier-Transformation ($IFFT_{B1}$) umfasst, die eine erste Unterträger-Untermenge in einem Unterträgerbereich (SR) einnimmt;
- wobei der zweite Eingangsabtaststrom ($l_o$, ..., $l_{B-1}$) eine zweite inverse schnelle Fourier-Transformation ($IFFT_{B2}$) umfasst, die eine zweite Unterträger-Untermenge im Unterträgerbereich (SR) einnimmt;
- wobei die erste und die zweite Unterträger-Untermenge kammartig verschachtelt sind;
- Bestimmen eines dritten Eingangsabtaststroms ($i_0$, ..., $i_{A-1}$) des abwärtsgewandelten Abtaststroms ($h_0$, ..., $h_{A-1}$) mit einer zweiten Blocklänge (A) und mit einem dritten Frequenzversatz ($\Delta f1$), wobei die erste Blocklänge (B), multipliziert mit einem ganzzahligen Faktor (K), gleich der zweiten Blocklänge (A) ist;
- Bestimmen einer ersten und einer zweiten schnellen Fourier-Vorwärtstransformation ($FFT_{B1}$, $FFT_{B2}$) mit der gleichen ersten Blocklänge (B) in Abhängigkeit von dem ersten beziehungsweise zweiten Eingangsabtaststrom ($k_0$, ..., $k_{B-1}$, $l_0$, ..., $l_{B-1}$);
- Bestimmen einer dritten schnellen Fourier-Vorwärtstransformation ($DFT_A$) mit der weiteren Blocklänge (A) in Abhängigkeit von dem dritten Eingangsabtaststrom ($i_0$, ..., $i_{A-1}$);
- Bestimmen eines ersten und eines zweiten Ausgangsdemodulationssymbolstroms ($n_0$, ..., $n_{M-1}$, $o_0$, ..., $o_{P-1}$) in Abhängigkeit von der ersten beziehungsweise der zweiten schnellen Fourier-Vorwärtstransformation ($FFT_{B1}$, $FFT_{B2}$) ; und
- Bestimmen eines dritten Ausgangsdemodulationssymbolstroms ($m_0$, ..., $n_{M-1}$) in Abhängigkeit von der dritten schnellen Fourier-Vorwärtstransformation ($DFT_A$) .

5.  OFDM-Demodulator (2000) nach Anspruch 4,

- wobei die gleiche erste Blocklänge (B) der ersten und zweiten schnellen Fourier-Vorwärtstransformation (DFTB), multipliziert mit einem ganzzahligen Faktor (K) größer als eins, gleich einer Hauptblocklänge (A) ist.

6. OFDM-Demodulator (2000) nach Anspruch 5,

    - wobei die Hauptblocklänge (A) gleich 2048 ist.

7. Funkvorrichtung (BS; UE) für den Betrieb in einem zellularen Funkkommunikationsnetz (RCN), wobei die Funkvorrichtung (BS; UE) umfasst:

    - den OFDM-Modulator (1000) nach einem der Ansprüche 1 bis 3, wobei die Funkvorrichtung (BS; UE) ein Funkmodul (R1; R2) und eine Antenne (A1; A2) umfasst, die ausgestaltet sind zum:
    - Aufwärtswandeln des verbundenen Abtaststroms ($g_0$, ..., $g_{A-1}$) auf die Trägerfrequenz höher als entsprechende Unterträgerfrequenzen;
    - Senden des verbundenen Abtaststroms ($g_0$, ..., $g_{A-1}$) auf einem ersten Funkkanal (ch1; ch2); und/oder wobei die Funkvorrichtung (BS; UE) den OFDM-Demodulator (2000) nach einem der Ansprüche 4 bis 6 umfasst, wobei die Funkvorrichtung (BS; UE) das Funkmodul (R1; R2) und die Antenne (A1; A2) umfasst, die ausgestaltet sind zum:
    - Empfangen eines Funksignals von einem zweiten Kanal (ch2; ch1);
    - Abwärtswandeln des Funksignals auf den Eingangsabtaststrom ($h_0$, ..., $h_{A-1}$, ...).

8. Verfahren zum Betrieb eines OFDM-Modulators (1000) für den Betrieb in einer Funkvorrichtung (BS; UE) eines zellularen Funkkommunikationsnetzes (RCN), wobei das Verfahren umfasst:

    - Empfangen eines ersten und eines zweiten Eingangsmodulationssymbolstroms ($b_0$, ..., $b_{M-1}$, $c_0$,..., $c_{P-1}$);
    - Empfangen eines dritten Eingangsmodulationssymbolstroms ($a_0$, ..., $a_{N-1}$);
    - Bestimmen einer ersten und zweiten inversen schnellen Fourier-Transformation ($IFFT_{B1}$, $IFFT_{B2}$) mit der gleichen ersten Blocklänge (B) in Abhängigkeit von dem ersten beziehungsweise zweiten Eingangsmodulationssymbolstrom ($b_0$, ..., $b_{M-1}$, $c_0$,..., $c_{P-1}$)
    - Bestimmen einer dritten inversen schnellen Fourier-Transformation ($IFFT_A$) mit einer zweiten Blocklänge (A) in Abhängigkeit von dem dritten Eingangsmodulationssymbolstrom ($a_0$, ..., $a_{N-1}$), wobei die erste Blocklänge (B), multipliziert mit einem ganzzahligen Faktor (K), gleich der zweiten Blocklänge (A) ist;
    - Bestimmen erster und zweiter frequenzverschobener Abtastungen (Sb2; Sb3) mit verschiedenen Frequenzversatzen zu einer Unterträgerfrequenz (DC) in Abhängigkeit von der ersten beziehungsweise der zweiten inversen schnellen Fourier-Transformation ($IFFT_{B1}$, $IFFT_{B2}$),
    - Bestimmen des ersten Frequenzversatzes ($\Delta f2$) für die erste inverse schnelle Fourier-Transformation ($IFFT_{B1}$), wobei die erste inverse schnelle Fourier-Transformation ($IFFT_{B1}$) eine erste Unterträger-Untermenge in einem Unterträgerbereich (SR) einnimmt;
    - Bestimmen des zweiten Frequenzversatzes ($\Delta f3$) für die zweite inverse schnelle Fourier-Transformation ($IFFT_{B2}$), wobei die zweite inverse schnelle Fourier-Transformation ($IFFT_{B2}$) eine zweite Unterträger-Untermenge im Unterträgerbereich (SR) einnimmt;
    - wobei die erste und die zweite Unterträger-Untermenge kammartig verschachtelt sind;
    - Bestimmen dritter frequenzverschobener Abtastungen (Sa) mit einem dritten Frequenzversatz ($\Delta f1$) zur Unterträgerfrequenz (DC) in Abhängigkeit von der dritten inversen schnellen Fourier-Transformation ($IDFT_A$);
    - Bestimmen eines ersten und zweiten Ausgangsabtaststroms ($e_0$, ..., $e_{B-1}$, $f_0$, ..., $f_{B-1}$) in Abhängigkeit von den ersten beziehungsweise den zweiten frequenzverschobenen Abtastungen (Sb2; Sb3);
    - Bestimmen eines dritten Ausgangsabtaststroms (Co, ..., $C_{A-1}$) in Abhängigkeit von den dritten frequenzverschobenen Abtastungen (Sa); und
    - Bestimmen eines verbundenen Abtaststroms ($g_0$, ..., $g_{B-1}$) in Abhängigkeit von dem ersten, zweiten und dritten Ausgangsabtaststrom ($e_0$, ..., $e_{B-1}$, $f_0$, ..., $f_{B-1}$, $C_0$, ..., $c_{A-1}$) zum Aufwärtswandeln des verbundenen Abtaststroms ($g_0$, ..., $g_{B-1}$) auf eine Trägerfrequenz, die höher ist als entsprechende Unterträgerfrequenzen.

9. Verfahren zum Betrieb eines OFDM-Demodulators (2000) für den Betrieb in einer Vorrichtung (BS; UE) eines zellularen Funkkommunikationsnetzes (RCN), wobei das Verfahren umfasst:

    - Empfangen eines abwärtsgewandelten Abtaststroms ($h_0$, ..., $h_{B-1}$, ...);
    - Bestimmen eines ersten beziehungsweise eines zweiten Eingangsabtaststroms ($k_0$, ..., $k_{B-1}$, $l_0$, ..., $l_{B-1}$) des abwärtsgewandelten Demodulationssymbolstroms ($h_0$, ..., $h_{B-1}$, ...) mit der gleichen ersten Blocklänge (B) und mit verschiedenen Frequenzversatzen ($-\Delta f2$, $-\Delta f3$) zu einer Unterträgerfrequenz (DC) ;

- wobei der erste Eingangsabtaststrom ($k_0$, ..., $k_{B-1}$) eine erste inverse schnelle Fourier-Transformation ($IFFT_{B1}$) umfasst, die eine erste Unterträger-Untermenge in einem Unterträgerbereich (SR) einnimmt;
- wobei der zweite Eingangsabtaststrom ($lo$, ..., $l_{B-1}$) eine zweite inverse schnelle Fourier-Transformation ($IFFT_{B2}$) umfasst, die eine zweite Unterträger-Untermenge im Unterträgerbereich (SR) einnimmt;
- wobei die erste und die zweite Unterträger-Untermenge kammartig verschachtelt sind;
- Bestimmen eines dritten Eingangsabtaststroms ($i_0$, ..., $i_{A-1}$) des abwärtsgewandelten Abtaststroms ($h_0$, ..., $h_{A-1}$) mit einer zweiten Blocklänge (A) und mit einem dritten Frequenzversatz ($\Delta f1$), wobei die erste Blocklänge (B), multipliziert mit einem ganzzahligen Faktor (K), gleich der zweiten Blocklänge (A) ist;
- Bestimmen einer ersten und einer zweiten schnellen Fourier-Vorwärtstransformation ($FFT_{B1}$, $FFT_{B2}$) mit der gleichen Blocklänge (B) in Abhängigkeit von dem ersten beziehungsweise zweiten Eingangsabtaststrom ($k_0$, ..., $k_{B-1}$, $l_0$, ..., $l_{B-1}$);
- Bestimmen einer dritten schnellen Fourier-Vorwärtstransformation ($DFT_A$) mit der weiteren Blocklänge (A) in Abhängigkeit von dem dritten Eingangsabtaststrom ($i_0$, ..., $i_{A-1}$) ;
- Bestimmen eines ersten und eines zweiten Ausgangsdemodulationssymbolstroms ($n_0$, ..., $n_{M-1}$, $o_0$, ..., $o_{P-1}$) in Abhängigkeit von der ersten beziehungsweise der zweiten schnellen Fourier-Vorwärtstransformation ($FFT_{B1}$, $FFT_{B2}$) ; und
- Bestimmen eines dritten Ausgangsdemodulationssymbolstroms ($m_0$, ..., $n_{M-1}$) in Abhängigkeit von der dritten schnellen Fourier-Vorwärtstransformation ($DFT_A$) .

## Revendications

1. Modulateur OFDM (1000) pour fonctionner dans un dispositif (BS ; UE) radio d'un réseau de radiocommunications cellulaire (RCN), dans lequel le modulateur OFDM (1000) comprend un processeur (P1 ; P2) et une mémoire (M1 ; M2) configurés pour :

   - recevoir des premier et deuxième flux de symboles de modulation d'entrée ($b_0$, ..., $b_{M-1}$, $c_0$, ..., $c_{P-1}$) ;
   - recevoir un troisième flux de symboles de modulation d'entrée ($a_0$, ..., $a_{N-1}$);
   - déterminer des première et deuxième transformées de Fourier rapide inverse ($IFFT_{B1}$, $IFFT_{B2}$) de la même première longueur de bloc (B) en fonction des premier et deuxième flux de symboles de modulation d'entrée ($b_0$, ..., $b_{M-1}$, $c_0$, ..., $c_{P-1}$), respectivement ;
   - déterminer une troisième transformée de Fourier rapide inverse ($IFFT_A$) d'une deuxième longueur de bloc (A) en fonction du troisième flux de symboles de modulation d'entrée ($a_0$, ..., $a_{N-1}$), dans lequel la première longueur de bloc (B) multipliée par un facteur entier (K) est égale à la deuxième longueur de bloc (A) ;
   - déterminer des premier et deuxième échantillons décalés en fréquence (Sb2; Sb3) de différents décalages de fréquence ($\Delta f2$, $\Delta f3$) à une fréquence de sous-porteuse (DC) en fonction des première et deuxième transformées de Fourier rapide inverse ($IFFT_{B1}$, $IFFT_{B2}$), respectivement, dans lequel les différents décalages de fréquence ($\Delta f2$, $\Delta f3$) sont déterminés sur une base de sous-porteuse afin d'utiliser des sous-espaces de sous-porteuse ;
   - déterminer des troisièmes échantillons décalés en fréquence (Sa) d'un troisième décalage de fréquence ($\Delta f1$) à la fréquence de sous-porteuse (DC) en fonction de la troisième transformée de Fourier rapide inverse ($IDFT_A$) ;
   - déterminer le premier décalage de fréquence ($\Delta f2$) pour la première transformée de Fourier rapide inverse ($IFFT_{B1}$), dans lequel la première transformée de Fourier rapide inverse ($IFFT_{B1}$) occupe un premier sous-ensemble de sous-porteuses dans une plage de sous-porteuses (SR) ;
   - déterminer le deuxième décalage de fréquence ($\Delta f3$) pour la deuxième transformée de Fourier rapide inverse ($IFFT_{B2}$), dans lequel la deuxième transformée de Fourier rapide inverse ($IFFT_{B2}$) occupe un deuxième sous-ensemble de sous-porteuses dans la plage de sous-porteuses (SR) ;
   - dans lequel les premier et deuxième sous-ensembles de sous-porteuses sont entrelacés en peigne ;
   - déterminer des premier et deuxième flux d'échantillons de sortie ($e_0$, ..., $e_{B-1}$, $f_0$, ..., $f_{B-1}$) en fonction des premier et deuxième échantillons décalés en fréquence (Sb2; Sb3), respectivement ;
   - déterminer un troisième flux d'échantillons de sortie ($c_0$, ..., $c_{A-1}$) en fonction des troisièmes échantillons décalés en fréquence (Sa) ; et
   - déterminer un flux d'échantillons joint ($g_0$, ..., $g_{B-1}$) en fonction des premier, deuxième et troisième flux d'échantillons de sortie ($e_0$, ..., $e_{B-1}$, $f_0$, ..., $f_{B-1}$, $c_0$, ..., $c_{A-1}$) pour effectuer une conversion ascendante du flux d'échantillons joint ($g_0$, ..., $g_{B-1}$) à une fréquence porteuse supérieure aux fréquences de sous-porteuses respectives.

2. Modulateur OFDM (1000) selon la revendication 1,

- dans lequel la même première longueur de bloc (B) des première et deuxième transformées de Fourier rapide inverse (IFFT$_B$) multipliée par un facteur entier (K) supérieur à un est égale à une longueur de bloc (A) principale.

3. Modulateur OFDM (1000) selon la revendication 2,

- dans lequel la longueur de bloc (A) principale est égale à 2048.

4. Démodulateur OFDM (2000) pour fonctionner dans un dispositif (BS ; UE) d'un réseau de radiocommunications cellulaire (RCN), dans lequel le démodulateur OFDM (2000) comprend un processeur (P1 ; P2) et une mémoire (M1 ; M2) configurés pour :

- recevoir un flux d'échantillons soumis à une conversion descendante ($h_0$, ..., $h_{B-1}$, ...) ;
- déterminer des premier et deuxième flux d'échantillons d'entrée ($k_0$, ..., $K_{B-1}$, $l_0$, ..., $l_{B-1}$) du flux d'échantillons soumis à une conversion descendante ($h_0$, ..., $h_{B-1}$, ...) de la même première longueur de bloc (B) et de différents décalages de fréquence (-$\Delta f2$, -$\Delta f3$) à une fréquence de sous-porteuse (DC), respectivement ;
- dans lequel le premier flux d'échantillons d'entrée ($k_0$, ..., $K_{B-1}$) comprend une première transformée de Fourier rapide inverse (IFFT$_{B1}$) occupant un premier sous-ensemble de sous-porteuses dans une plage de sous-porteuses (SR) ;
- dans lequel le deuxième flux d'échantillons d'entrée ($l_0$, ..., $l_{B-1}$) comprend une deuxième transformée de Fourier rapide inverse (IFFT$_{B2}$) occupant un deuxième sous-ensemble de sous-porteuses dans la plage de sous-porteuses (SR) ;
- dans lequel les premier et deuxième sous-ensembles de sous-porteuses sont entrelacés en peigne ;
- déterminer un troisième flux d'échantillons d'entrée ($i_0$, ..., $i_{A-1}$) du flux d'échantillons soumis à une conversion descendante ($h_0$, ..., $h_{A-1}$) d'une deuxième longueur de bloc (A) et d'un troisième décalage de fréquence ($\Delta f1$), dans lequel la première longueur de bloc (B) multipliée par un facteur entier (K) est égale à la deuxième longueur de bloc (A) ;
- déterminer des première et deuxième transformées de Fourier rapide avant (FFT$_{B1}$, FFT$_{B2}$) de la même première longueur de bloc (B) en fonction des premier et deuxième flux d'échantillons d'entrée ($k_0$, ..., $K_{B-1}$, $l_0$, ..., $l_{B-1}$), respectivement ;
- déterminer une troisième transformée de Fourier rapide avant (DFT$_A$) de la longueur de bloc (A) supplémentaire en fonction du troisième flux d'échantillons d'entrée ($i_0$, ..., $i_{A-1}$) ;
- déterminer des premier et deuxième flux de symboles de démodulation de sortie ($n_0$, ..., $n_{M-1}$, $o_0$, ..., $o_{P-1}$) en fonction des première et deuxième transformées de Fourier rapide avant (FFT$_{B1}$, FFT$_{B2}$), respectivement ; et
- déterminer un troisième flux de symboles de démodulation de sortie ($m_0$, ..., $n_{M-1}$) en fonction de la troisième transformée de Fourier rapide avant (DFT$_A$).

5. Démodulateur OFDM (2000) selon la revendication 4,

- dans lequel la même première longueur de bloc (B) des première et deuxième transformées de Fourier rapide avant (DFTB) multipliée par un facteur entier (K) supérieur à un est égale à une longueur de bloc (A) principale.

6. Démodulateur OFDM (2000) selon la revendication 5,

- dans lequel la longueur de bloc (A) principale est égale à 2048.

7. Dispositif (BS ; UE) radio pour fonctionner dans un réseau de radiocommunications cellulaire (RCN), dans lequel le dispositif (BS ; UE) radio comprend :

- le modulateur OFDM (1000) selon l'une des revendications 1 à 3, dans lequel le dispositif (BS ; UE) radio comprend un module radio (R1 ; R2) et une antenne (A1 ; A2) configurés pour :
- effectuer une conversion ascendante du flux d'échantillons joint ($g_0$, ..., $g_{A-1}$) à la fréquence porteuse supérieure aux fréquences de sous-porteuses respectives ;
- transmettre le flux d'échantillons joint ($g_0$, ..., $g_{A-1}$) sur un premier canal radio (ch1 ; ch2) ; et/ou dans lequel le dispositif (BS ; UE) radio comprend le démodulateur OFDM (2000) selon l'une des revendications 4 à 6, dans lequel le dispositif (BS ; UE) radio comprend le module radio (R1 ; R2) et l'antenne (A1 ; A2) configurés pour :
- recevoir un signal radio à partir d'un deuxième canal (ch2 ; ch1) ;
- effectuer une conversion descendante du signal radio au flux d'échantillons d'entrée ($h_0$, ..., $h_{A-1}$, ...) .

**8.** Procédé pour faire fonctionner un modulateur OFDM (1000) pour fonctionner dans un dispositif (BS ; UE) radio d'un réseau de radiocommunications cellulaire (RCN), dans lequel le procédé comprend :

- la réception de premier et deuxième flux de symboles de modulation d'entrée ($b_0$, ..., $b_{M-1}$, $c_0$, ..., $c_{P-1}$) ;
- la réception d'un troisième flux de symboles de modulation d'entrée ($a_0$, ..., $a_{N-1}$) ;
- la détermination de première et deuxième transformées de Fourier rapide inverse ($IFFT_{B1}$, $IFFT_{B2}$) de la même première longueur de bloc (B) en fonction des premier et deuxième flux de symboles de modulation d'entrée ($b_0$, ..., $b_{M-1}$, $c_0$, ..., $c_{P-1}$), respectivement ;
- la détermination d'une troisième transformée de Fourier rapide inverse ($IFFT_A$) d'une deuxième longueur de bloc (A) en fonction du troisième flux de symboles de modulation d'entrée ($a_0$, ..., $a_{N-1}$), dans lequel la première longueur de bloc (B) multipliée par un facteur entier (K) est égale à la deuxième longueur de bloc (A) ;
- la détermination de premier et deuxième échantillons décalés en fréquence (Sb2 ; Sb3) de différents décalages de fréquence à une fréquence de sous-porteuse (DC) en fonction des première et deuxième transformées de Fourier rapide inverse ($IFFT_{B1}$, $IFFT_{B2}$), respectivement ;
- la détermination du premier décalage de fréquence (Δf2) pour la première transformée de Fourier rapide inverse ($IFFT_{B1}$), dans lequel la première transformée de Fourier rapide inverse ($IFFT_{B1}$) occupe un premier sous-ensemble de sous-porteuses dans une plage de sous-porteuses (SR) ;
- la détermination du deuxième décalage de fréquence (Δf3) pour la deuxième transformée de Fourier rapide inverse ($IFFT_{B2}$), dans lequel la deuxième transformée de Fourier rapide inverse ($IFFT_{B2}$) occupe un deuxième sous-ensemble de sous-porteuses dans la plage de sous-porteuses (SR) ;
- dans lequel les premier et deuxième sous-ensembles de sous-porteuses sont entrelacés en peigne ;
- la détermination de troisièmes échantillons décalés en fréquence (Sa) d'un troisième décalage de fréquence (Δf1) à la fréquence de sous-porteuse (DC) en fonction de la troisième transformée de Fourier rapide inverse ($IDFT_A$) ;
- la détermination de premier et deuxième flux d'échantillons de sortie ($e_0$, ..., $e_{B-1}$, $f_0$, ..., $f_{B-1}$) en fonction des premier et deuxième échantillons décalés en fréquence (Sb2 ; Sb3), respectivement ;
- la détermination d'un troisième flux d'échantillons de sortie ($c_0$, ..., $c_{A-1}$) en fonction des troisièmes échantillons décalés en fréquence (Sa) ; et
- la détermination d'un flux d'échantillons joint ($g_0$, ..., $g_{B-1}$) en fonction des premier, deuxième et troisième flux d'échantillons de sortie ($e_0$, ..., $e_{B-1}$, $f_0$, ..., $f_{B-1}$, $c_0$, ..., $c_{A-1}$) pour effectuer une conversion ascendante du flux d'échantillons joint ($g_0$, ..., $g_{B-1}$) à une fréquence porteuse supérieure aux fréquences de sous-porteuses respectives.

**9.** Procédé pour faire fonctionner un démodulateur OFDM (2000) pour fonctionner dans un dispositif (BS ; UE) d'un réseau de radiocommunications cellulaire (RCN), dans lequel le procédé comprend :

- la réception d'un flux d'échantillons soumis à une conversion descendante ($h_0$, ..., $h_{B-1}$, ...) ;
- la détermination de premier et deuxième flux d'échantillons d'entrée ($k_0$, ..., $K_{B-1}$, $l_0$, ..., $l_{B-1}$) du flux d'échantillons soumis à une conversion descendante ($h_0$, ..., $h_{B-1}$, ...) de la même première longueur de bloc (B) et de différents décalages de fréquence (-Δf2, -Δf3) à une fréquence de sous-porteuse (DC), respectivement ;
- dans lequel le premier flux d'échantillons d'entrée ($k_0$, ..., $K_{B-1}$) comprend une première transformée de Fourier rapide inverse ($IFFT_{B1}$) occupant un premier sous-ensemble de sous-porteuses dans une plage de sous-porteuses (SR) ;
- dans lequel le deuxième flux d'échantillons d'entrée ($l0$, ..., $l_{B-1}$) comprend une deuxième transformée de Fourier rapide inverse ($IFFT_{B2}$) occupant un deuxième sous-ensemble de sous-porteuses dans la plage de sous-porteuses (SR) ;
- dans lequel les premier et deuxième sous-ensembles de sous-porteuses sont entrelacés en peigne ;
- la détermination d'un troisième flux d'échantillons d'entrée ($i_o$, ..., $i_{A-1}$) du flux d'échantillons soumis à une conversion descendante ($h_0$, ..., $h_{A-1}$) d'une deuxième longueur de bloc (A) et d'un troisième décalage de fréquence (Δf1), dans lequel la première longueur de bloc (B) multipliée par un facteur entier (K) est égale à la deuxième longueur de bloc (A) ;
- la détermination de première et deuxième transformées de Fourier rapide avant ($FFT_{B1}$, $FFT_{B2}$) de la même longueur de bloc (B) en fonction des premier et deuxième flux d'échantillons d'entrée ($k_0$, ..., $K_{B-1}$, $l_0$, ..., $l_{B-1}$), respectivement ;
- la détermination d'une troisième transformée de Fourier rapide avant ($DFT_A$) de la longueur de bloc (A) supplémentaire en fonction du troisième flux d'échantillons d'entrée ($i_o$, ..., $i_{A-1}$) ;
- la détermination de premier et deuxième flux de symboles de démodulation de sortie ($n_0$, ..., $n_{M-1}$, $o_0$, ..., $o_{P-1}$) en fonction des première et deuxième transformées de Fourier rapide avant ($FFT_{B1}$, $FFT_{B2}$), respectivement ; et

- la détermination d'un troisième flux de symboles de démodulation de sortie ($m_0$, ..., $n_{M-1}$) en fonction de la troisième transformée de Fourier rapide avant ($DFT_A$).

Fig. 1a

Fig. 1b

1800

**1802** receiving a first and second ingress modulation-symbol stream

**1804** determining a first and second inverse Fast Fourier Transform of the same block lengths in dependence on the first and second ingress modulation-symbol stream, respectively

**1805** determining first and second frequency-shifted samples of different frequency offsets to a subcarrier frequency in dependence on the first and second inverse Fast Fourier Transform, respectively

**1806** determining a first and second egress sample stream in dependence on the first and second frequency-shifted samples, respectively

**1808** determing a joined sample stream in dependence on the first and second egress sample stream for up-converting the joined sample stream to a carrier frequency higher than respective subcarrier frequencies

Fig. 1c

2800

receiving a down-converted sample stream

2802

determining a first and second ingress sample stream of the down-converted demodulation-symbol stream of the same block length and of different frequency offset to a subcarrier frequency, respectively

2804

determining a first and second forward Fast Fourier Transform of the same block length in dependence on the first and second ingress sample stream, respectively

2806

determining a first and second egress demodulation-symbol stream in dependence on the first and second forward Fast Fourier Transform, respectively

2808

Fig. 1d

Fig. 2

Fig. 3

Fig. 4

Fig. 5

EP 3 337 115 B1

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERIK DAHLMAN.** *4G, LTE Evolution and the Road to 5G*
- **NOKIA.** On the URLLC transmission formats for NR TDD. *3GPP, R1-167269*
- **INTEL.** Multiplexing of different numerologies for forward compatibility. *3GPP, R1-167124*
- The third radio device UE_leg is a LTE legacy device and fulfils. *3GPP TS36.211 V14.00,* September 2016